(19) **Europäisches Patentamt**
**European Patent Office**
**Office européen des brevets**

(11) **EP 2 517 943 B1**

(12) **EUROPEAN PATENT SPECIFICATION**

(45) Date of publication and mention
of the grant of the patent:
**22.09.2021 Bulletin 2021/38**

(51) Int Cl.:
**B61F 5/44** *(2006.01)*    **B61K 9/08** *(2006.01)*
**G01B 5/213** *(2006.01)*    **B61F 5/38** *(2006.01)*

(21) Application number: **10839658.1**

(22) Date of filing: **13.08.2010**

(86) International application number:
**PCT/KR2010/005362**

(87) International publication number:
**WO 2011/078461 (30.06.2011 Gazette 2011/26)**

(54) **ACTIVE STEERING CONTROL DEVICE AND METHOD FOR RAILROAD VEHICLE**

AKTIVE LENKSTEUERUNGSVORRICHTUNG UND VERFAHREN FÜR EIN SCHIENENFAHRZEUG

DISPOSITIF DE COMMANDE ACTIVE DE DIRECTION ET PROCÉDÉ POUR VÉHICULE
FERROVIAIRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.12.2009 KR 20090130656**

(43) Date of publication of application:
**31.10.2012 Bulletin 2012/44**

(73) Proprietor: **Korea Railroad Research Institute
Uiwang-city, Gyeonggi-do 437-757 (KR)**

(72) Inventors:
• **HUR, Hyun-Moo
Uiwang-si,
Gyeonggi-do, 16025 (KR)**
• **YOU, Won-Hee
Seoul 138-240 (KR)**
• **KIM, Min-Soo
Gyeonggi-do 435-060 (KR)**

• **PARK, Joon-Hyuk
Suwon-city
Gyeonggi-do 443-400 (KR)**

(74) Representative: **Petraz, Gilberto Luigi et al
GLP S.r.l.
Viale Europa Unita, 171
33100 Udine (IT)**

(56) References cited:
**EP-A1- 0 368 403      EP-A1- 0 655 378
DE-A1- 4 240 098      JP-A- 11 115 757
JP-A- H08 104 233      JP-A- H08 142 862
JP-A- H08 198 108      JP-A- 2003 237 573
JP-A- 2003 237 573      JP-A- 2008 126 811
KR-A- 20090 020 634**

• **None**

**Description**

[Technical Field]

The present invention relates to a railroad vehicle and an apparatus and method for actively controlling steering of the railroad vehicle and, more particularly, to an apparatus and method for actively controlling steering of the railroad vehicle which can smoothly steer the railroad vehicle that is moving, while remarkably reducing an angle of attack which exists between a curved line of a rail track and the wheel and axle, by estimating the radius of curvature of the curved line in real-time when the railroad vehicle is moving on the curved line and controlling an optimal steering angle of the wheel and axle according to the estimate of the radius of curvature.

[Background Art]

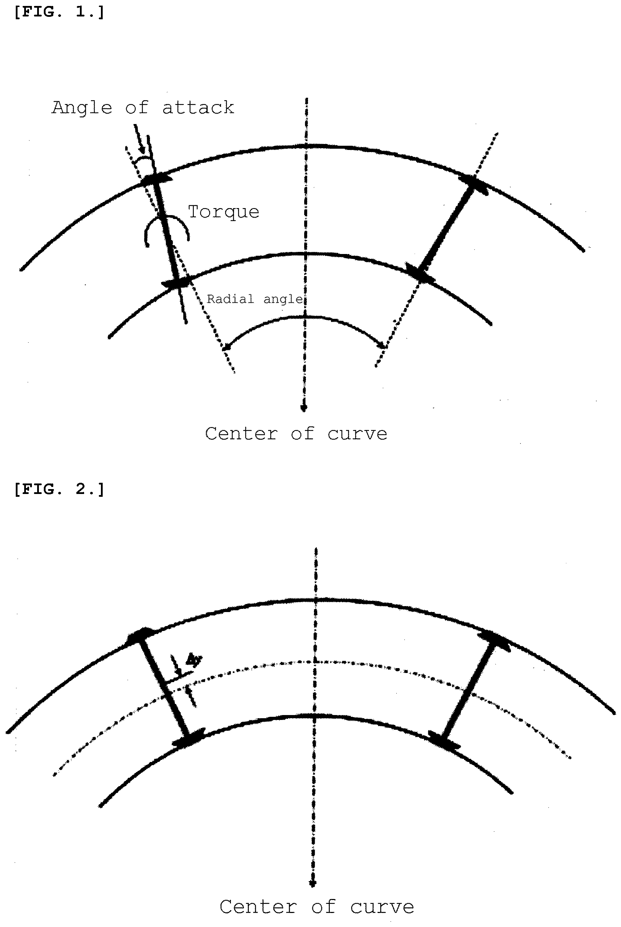

Generally, when a railroad vehicle is moving on a curved line of a rail, as shown in FIG. 1, an angle of attack exists between the rail track and the wheel and axle, which has an adverse effect on the railroad vehicle smoothly moving on the curved line, causing, due to friction between a flange of a wheel and a side face of the rail, making severe noise as well as causing the abrasion between the wheel and the rail to be accelerated, even resulting in the breakage of the same and thus a serious accident such as the derailment of a train.

As solutions to overcome this problem, methods of active steering on the wheel and axle have been proposed in order to provide adaptation to the curved line according to the radius of curvature when a train moves on the curved line to make movement smooth.

A first solution is a method for control of the lateral displacement of the wheel and axle which, as shown in FIG. 2, moves the wheel and axle by $\Delta y$ towards the outer rail to make a rolling radius of the outer rail wheel larger than that of the inner rail wheel, promoting smooth movement.

A second solution is a method for control of a radial position of the wheel and axle, which as shown in FIG. 1, provides rotary torque in the yawing direction to the wheel and axle to position the wheel and axle radially (or in the direction of radius) from the curve of the curved line, thereby removing the angle of attack.

As an example of such control methods, Korean Patent No. 10-0916594 discloses a steering bogie 10 for railway vehicle, which is steered by an actuator 21. The steering bogie includes front and rear steering mechanisms 20 and 20A which are hinged to opposite axle boxes 14 of front and rear wheel and axles 12 to steer the front and rear wheel and axles 12. The front and rear steering mechanisms 20 and 20A include actuators 21, driving links 23 and 23a, driven links 24 and 24a, and transfer links 25. The driving links are hinge-connected with a bogie frame 11 and deliver the power generated by the actuators 21. The driven links are hinge-connected with the driving links 23 and 23a so as to steer the axle boxes 14. The transfer links connect the driving links 23 and 23a installed on both sides of the bogie 10.

However, the technique disclosed in Korean Patent No. 10-0916594 has advantages first because it is configured to offer rotary torque in yawing direction to the wheel and axle 12, determine whether the rail line is a linear line or a curved line, and control the steering angle of the wheel and axle 12 so as to reduce an angle of attack during moving on the curved line, thereby reducing friction between the rail and a flange of the wheel. The effects this provides create a comfortable ride and reduce abrasion of the rail and the wheel. However, there are problems because the curvature of the curved line varies according to position, and the steering angle of the wheel and axle should still also be controlled according to the curvature, and there is no construction to control the steering angle to suit the varying curvature, so that the angle of attack still exists while moving on the curved line, resulting in friction between the flange of the wheel and the side face of the rail and therefore the noise and abrasion of the wheel and the rail.

Document EP-A-0655378 also discloses a known apparatus for steering the wheels, in particular wheel sets, of railway vehicles. Document DE-A-4240098 describes a chassis for rail vehicles. Document EP-A-0368403 describes a steering bogie for railway cars. Document JP-A-H08198108 describes a truck for railroad car. Document JP-A-H08104233 describes a steering device for railway rolling stock bogie. Document JP-A-H08142862 describes a bogie for rolling stock. Document JP-A-2003237573 describes a vehicle motion control system.

[Disclosure]

[Technical Problem]

Accordingly, the present invention has been made keeping in mind the above problems occurring in the related art, and is intended to provide a railroad vehicle and an apparatus and method for active steering control of the railroad vehicle which are able to calculate the radius of curvature of a curved line of a rail in real-time when the railroad vehicle moves on the curved line and control an optimal steering angle of the wheel and axle according to the estimated radius of curvature, thereby remarkably reducing an angle of attack, which exists between the curved line and the wheel and axle, and therefore abrasion of the wheel and the rail and providing a comfortable ride.

[Technical Solution]

In an aspect, the present invention provides a railroad vehicle comprising an apparatus for actively controlling the railroad vehicle, the apparatus including:
a measuring unit measuring drive data of the railroad vehicle that is moving; an estimating unit estimating the radius of curvature of the curved line on which the railroad vehicle is moving, by using the data measured by the measuring unit; a calculating unit setting a target value of a steering angle of the wheel and axle of the moving railroad vehicle, using the radius of curvature estimated by the estimating unit; a controller comparing an actual steering angle of the wheel and axle with the target value of the steering angle of the wheel and axle, which is set by the calculating unit to generate a steering control signal for the wheel and axle; and an actuator steering the wheel and axle using the steering control signal from the controller.

The measuring unit includes a relative displacement measuring device and a relative angle measuring device installed in one side of a bogie part to measure the relative longitudinal-displacement and a relative angle, respectively, between a vehicle body and respective front and rear bogies, or a Global Positioning System (GPS) installed at the center of the front bogie of the vehicle body.

The measuring unit may further include a measurer which measures the actual steering angle of the wheel and axle using the measurement of the driven displacement of the actuator.

The estimating unit may estimate the radius of curvature using a simple Equation with variables including the relative displacement and relative angle measured by the relative displacement and relative angle measuring devices, the Equation being as follows:

$$R_{est} = \frac{2Lx}{\Delta}$$

The estimating unit estimates the radius of curvature using a simple Equation with variables including a central position of the front bogie measured by the GPS, the Equation being as follows:

$$R_{est} = \frac{\Delta^2 + L^2}{2\Delta}$$

The calculating unit may set the target value of the steering angle of the wheel and axle of the moving railroad vehicle using a simple Equation with variables including the radius of curvature measured by the estimating unit, the Equation being as follows:

$$2\delta_{desire} = \frac{2d}{R_{est}} = \frac{2d}{(1000/C_{est})} = \frac{2dC_{est}}{1000}$$

The controller may include a comparer that compares the target value of the steering angle of the wheel and axle set by the calculating unit with the actual steering angle of the wheel and axle estimated by the estimating unit, and a signal generator that generates the steering control signal on the wheel and axle to the actuator, using the results of comparison furnished by the comparer.

In another aspect, the present invention provides a method for active steering of a railroad vehicle, the method including: measuring the drive data of the railroad vehicle that is moving; estimating the radius of curvature of a curved line of a track on which the railroad vehicle moves, using the measured drive data; setting a target value of a steering angle of the wheel and axle of the moving railroad vehicle, using the estimated radius of curvature; comparing the target value of the steering angle of the wheel and axle with an actual steering angle of the wheel and axle; and controlling the steering angle of the wheel and axle according to a comparison result.

Measuring of the drive data may include measuring a relative angle generated between a vehicle body and front and rear bogies when the railroad vehicle moves on the curved line, using a displacement sensor; and measuring a relative longitudinal displacement generated between the vehicle body and front and rear bogies when the railroad vehicle moves on the curved line, using a displacement sensor.

Measuring the drive data may include obtaining position information about a central position of the front bogie in real-time, using a GPS attached to the center of the front bogie; and estimating the position information about the central position of the rear bogie using the obtained central position of the front bogie.

The actual steering angle may be obtained by measuring the driven displacement of the actuator using a measurer for measuring a steering angle.

In controlling the steering angle, the steering angle of the wheel and axle may be continuously controlled until there is no difference between the target value of the steering angle and the actual angle of steering on the wheel and axle.

[Advantageous Effects]

According to the present invention, the apparatus and method for active steering control of a railroad vehicle are able to estimate the radius of curvature of a curved line of a rail in real-time when the railroad vehicle moves on the curved line and control an optimal steering angle of the wheel and axle according to the estimate of the radius of curvature.

Further, according to the present invention, the apparatus and method can smoothly steer the moving railroad vehicle and reduce an angle of attack, which exists between the curved line and the wheel and axle, and therefore abrasion of the wheel and the rail, providing a comfortable ride.

Furthermore, according to the present invention, input parameters required for the control of the steering on the wheel and axle are made up of data that is actually measurable from the railroad vehicle, so that they are practically applicable to all currently available vehicles, additionally providing the remarkable effect of improved practicality.

[Description of Drawings]

FIG. 1 is a concept diagram on the control of a radial position of the wheel and axle on a curved line of a rail;
FIG. 2 is a concept diagram on the conventional control of lateral displacement of the wheel and axle;

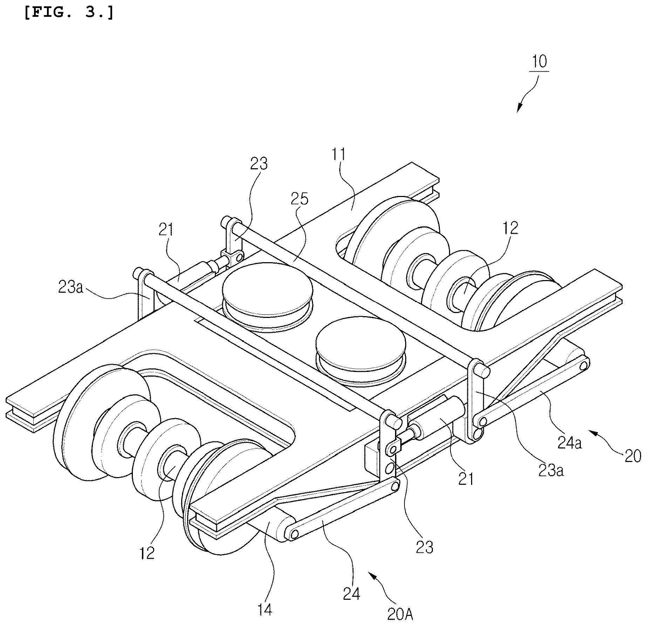

FIG. 3 is a perspective view of a conventional active steering bogie;
FIGS. 4 to 6 are schematic plan views showing a railroad vehicle moving on a curved line of a rail;
FIG. 7 is a conceptual block diagram of an apparatus for active steering control of a railroad vehicle according to the present invention;
FIG. 8 is a conceptual block diagram of a method for active steering control of a railroad vehicle according to the present invention;
FIG. 9 is a flow diagram of a method for active steering control of a railroad vehicle according to the present invention;
FIG. 10 is a graphical diagram showing the analysis of a relative angle of the wheel and axle in a simulation of a railroad vehicle moving on a curved line, in which an apparatus and method for active steering control according to the present invention are used or not;
FIG. 11 is a graphical diagram showing the comparison of longitudinal force in a simulation of a railroad vehicle moving on a curved line, in which an apparatus and method for active steering control according to the present invention are used or not;
FIG. 12 is a graphical diagram showing the comparison of lateral force in a simulation of a railroad vehicle moving on a curved line, in which an apparatus and method for active steering control according to the present invention are used or not; and
FIG. 13 is a graphical diagram showing a variation in yawing angle of the front and rear side wheel and axle when an actuator is driven using an adaptation of an apparatus and method for active steering control according to the present invention.

[Best Mode]

Hereinbelow, preferred embodiments of the present invention will be described in detail with reference to the accompanying drawings. The same reference numerals will be used throughout the drawings to refer to the same or like parts, a repeated description of which will be omitted. It should be understood that the present invention may be embodied into a plurality of different forms, and is not limited to the embodiments described.

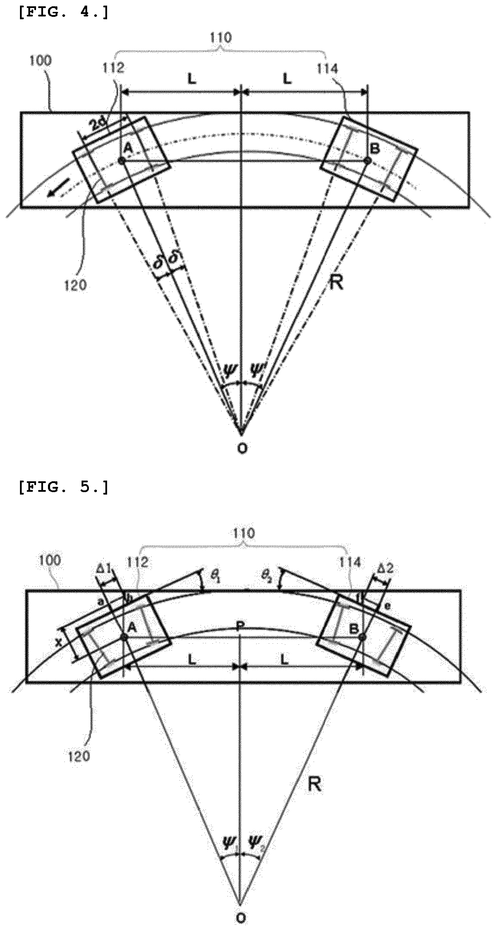

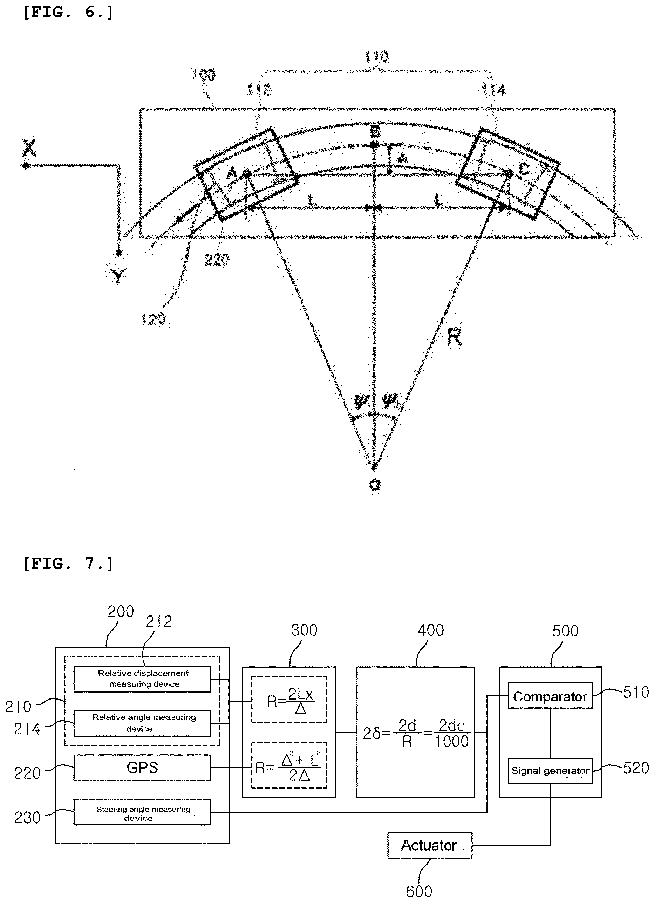

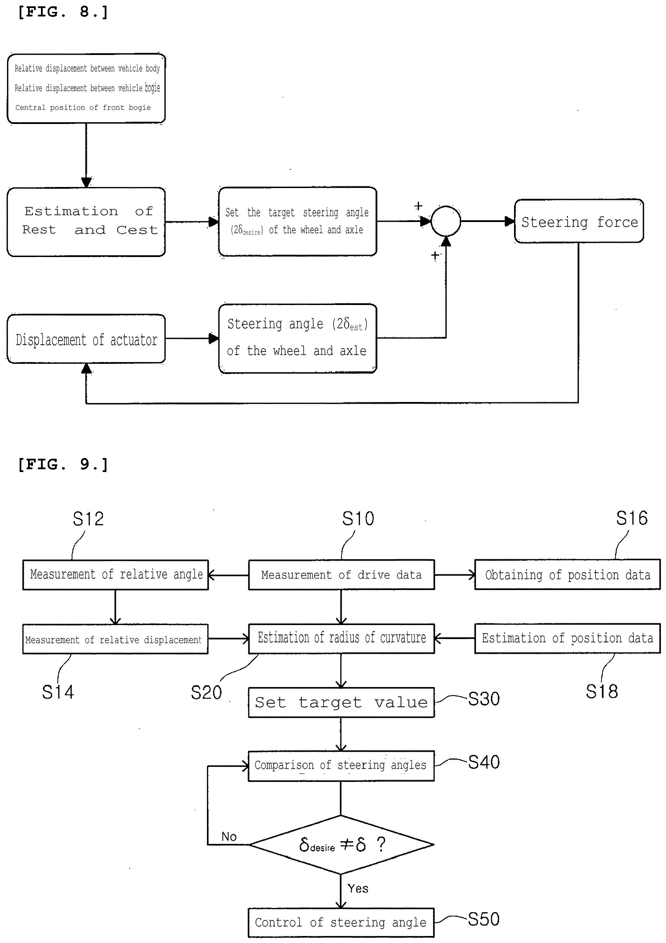

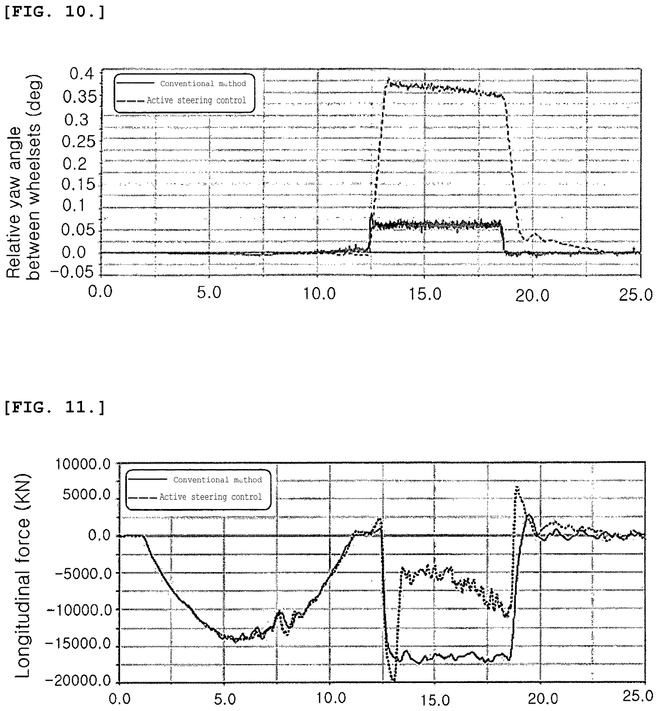

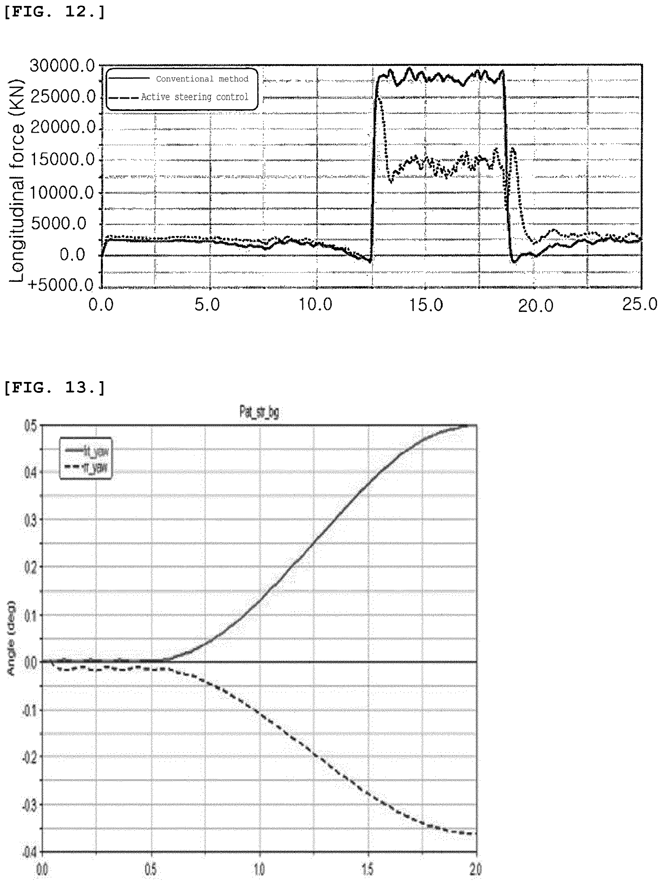

FIGS. 4 to 6 are schematic plan views showing a railroad vehicle moving on a curved line of a rail, FIG. 7 is a conceptual block diagram of an apparatus for active steering control of a railroad vehicle according to the present invention, FIG. 8 is a conceptual block diagram of a method for active steering control of a railroad vehicle according to the present invention, and FIG. 9 is a flow diagram of a method for active steering control of a railroad vehicle according to the present invention. FIG. 10 is a graphical diagram showing the analysis of a relative angle of the wheel and axle in a simulation of a railroad vehicle moving on a curved line, in which an apparatus and method for active steering control according to the present invention are used or not, FIG. 11 is a graphical diagram showing the comparison of longitudinal force in a simulation of a railroad vehicle moving on a curved line, in which an apparatus and method for active steering control according to the present invention are used or not, FIG. 12 is a graphical diagram showing the comparison of lateral force in a simulation of a railroad vehicle moving on a curved line, in which an apparatus and method for active steering control according to the present invention are used or not, and FIG. 13 is a graphical diagram showing a variation in yawing angle of the front and rear side wheel and axle when an actuator is driven using an adaptation of an apparatus and method for active steering control according to the present invention.

The present invention relates to an apparatus and method for the active steering control of a railroad vehicle, in which unlike the related art, in which whether a railroad vehicle moves on a curved line or a linear line in a track is detected and a steering angle is separately controlled according to the detected curved or linear line, the steering angle of the wheel and axle 120 is properly controlled according to various radiuses of curvature that actually exist on a rail to considerably reduce an angle of attack generated between the curved line and the wheel and axle 120, and therefore abrasion between the rail and a flange of the wheel, thereby reducing abrasion of the rail and wheel and providing an improved comfortable ride as well.

First, the principle of setting a steering angle of the wheel and axle 120 according to a curvature of a curved line of a rail, as shown in FIG. 4, will be explained when the centers A and B of front and rear bogies 112 and 114 are located on a curve having a radius of curvature R, the radius of curvature R is very much greater than a distance 2L between the centers of the front and rear bogies 112 and 114, so that an Equation 1 will be established in a triangle OAB as follows:

$$\text{Equation 1}$$

$$2\psi \doteqdot \frac{2L}{R}$$

(where L: a half (m) he distance between the centers of the bogies, R: a radius (m) of curvature, $\psi$ : a rotary angle (rad) between the bogies)

In addition, as in the Equation 1, a target value ($\delta_{desire}$) of a steering angle of the wheel and axle 120 for smooth steering control of the two wheel-and-axles of a bogie when a railroad vehicle moves on a curved line having a radius R of curvature can be expressed by Equation 2 indicative of a geometrical relationship shown in FIG. 4, as follows:

$$\text{Equation 2}$$

$$2\delta_{desire} = \frac{2d}{R} = \frac{2d}{(1000/C)} = \frac{2dC}{1000}$$

(where $\delta_{desire}$: a target steering angle of wheel and axle, d: a half of wheelbase (m), C: curvature (1/Km) defined as 1/R)

Here, the radius of curvature R and the curvature C should be measured in order to calculate the target steering angle $\delta_{desire}$ of the wheel and axle 120 using the Equations 1 and 2. However, they use an estimate ($R_{est}$) of the radius of curvature and an estimate ($C_{est}$) of curvature, which were estimated in real-time by a separate method. Here, since the curvature is defined as 1/R, if $R_{est}$) is obtained, $C_{est}$) can be automatically obtained.

The estimate ($R_{est}$) of the radius of curvature can be calculated as follows:
First, the radius of curvature R of a curved line in a track is estimated using relative angles ($\theta_1$, $\theta_2$) and relative longitudinal displacements ($\Delta_1$, $\Delta_2$) generated between a body 100 of the railroad vehicle (also referred to as a vehicle body') and a bogie 110 when the railroad vehicle moves on the curved line. As shown in FIG. 5, when the railroad vehicle moves on the curved line, relative angles ($\theta_1$, $\theta_2$) and relative longitudinal displacements ($\Delta_1$, $\Delta_2$) are generated between the vehicle body 100 and the front/rear bogies 112 and 114, and such relative angles ($\theta_1$, $\theta_2$) and the relative longitudinal displacements ($\Delta_1$, $\Delta_2$) between the vehicle body 100 and the front/rear bogies 112 and 114 are measured and then used to estimate the radius of curvature R.

Here, the relative angles ($\theta_1$, $\theta_2$) and the relative displacements ($\Delta_1$, $\Delta_2$) are measured by a displacement sensor 210 which detects the physical variation in an object with various devices and converts the physical variation into a distance. The displacement sensor may include an optical displacement, sensor, an ultrasonic displacement sensor, etc. The displacement sensor 210 may preferably be installed inside a separate bracket (not shown), which is mounted in one side of the bogie, in order to prevent it from being broken while the railroad vehicle is moving.

In the meantime, after the relative angles ($\theta_1$, $\theta_2$) and the relative displacements ($\Delta_1$, $\Delta_2$) have been measured

using the displacement sensor 210, the radius of curvature R of the curved line on which the railroad vehicle moves will be estimated using the measured data. The radius of curvature R will be estimated by a geometrical relationship applicable to between the vehicle body 100 and the front/rear bogies 112 and 114 as shown in FIG. 5 when the railroad vehicle moves on the curved line, as follows:

Here, assuming that when moving on the curved line, the relative angles ($\theta_1$, $\theta_2$) and the relative displacements ($\Delta_1$, $\Delta_2$) between the vehicle body 100 and the front/rear bogies 112 and 114 each are not identical to, but are slightly different from each other, and the front/rear bogies 112 and 114 are located perpendicular (radially positioned) to the center of the curved line, the radius of curvature R will be estimated.

First, when the radius of curvature: R, the center of the radius of curvature: O, the centers of front/rear bogies 112 and 114: A and B, a half of the shortest distance between the centers of the front/rear bogies 112 and 114: L, the distance between the displacement sensor and the center of the bogies 112 and 114: x, the relative angle (rad) between the vehicle body 100 and the front/rear bogies 112 and 114: $\theta_1$, $\theta_2$, the relative longitudinal displacement between the vehicle body 100 and the front/rear bogies 112 and 114: $\Delta_1$, $\Delta_2$, and the rotary angle (rad) between the vehicle body 100 and the front/rear bogies 112 and 114: $\psi_1$, $\psi_2$, assuming that the railroad vehicle is positioned at a radial position, , $\theta_1 \fallingdotseq \theta_2$, $\psi_1 \fallingdotseq \psi_2$ and by the principle of similarity of a triangle, $\theta_1 = \psi_1$, $\theta_2 = \psi_2$.

In addition, in FIG. 5, a triangle OPA and a triangle Aab are similar, and a triangle OPB and a triangle Bef are similar, so that the relative angle and the rotary angle can be respectively expressed by the principle of trigonometric functions as follows:

$$\theta_1 = \frac{\Delta_1}{x}, \; \theta_2 = \frac{\Delta_2}{x}, \quad \psi_1 = \psi_2 = \psi = \frac{L}{R}$$

$$2\psi = \theta_1 + \theta_2 = \frac{\Delta_1}{x} + \frac{\Delta_2}{x} = \frac{2L}{R}$$

Thus, Here, if $\Delta_1 + \Delta_2 = \Delta$, the radius of curvature R of the curved line on which the railroad vehicle moves can be expressed by an Equation 3 as follows:

Equation 3

$$R = \frac{2Lx}{\Delta}$$

When the relative longitudinal displacements ($\Delta_1$, $\Delta_2$) between the vehicle body 100 of the moving railroad vehicle and the bogies 110 are measured by Equation 3, the radius of curvature R of the curved line on which the railroad vehicle moves is estimated in real-time, so that the estimated radius ($R_{est}$) of curvature can be obtained.

Alternatively, the radius of curvature R on which the railroad vehicle moves can be estimated by measuring the central position of the bogie 110 and then estimating the radius of curvature R using the measured central position.

More specifically, the radius of curvature R is estimated such that the central position of the central position of the front bogie 112 is obtained by a Global Positioning System (GPS) 220 which is attached to the center of the front bogie 112 of the vehicle body 100, the central position of the rear bogie 114 is estimated using the obtained central position of the front bogie 112, and then the radius of curvature R of the curved line, on which the railroad vehicle moves, is estimated using the central positions of the front and rear bogies 112 and 114.

That is, since the center of the rear bogie 114 is located on the radius of curvature R along which the center of the front bogie 112 passes, data on the central position of the front bogie 112 is obtained at regular time intervals using the GPS 220, and the central position of the rear bogie 114 (which is part of the obtained position data) can be estimated using the speed of the moving railroad vehicle and the distance between the front and rear bogies 112 and 114. Further, the radius of curvature R is estimated using the position data for the central position of the front and rear bogies 112 and 114 and the geometrical shape of the railroad vehicle shown in FIG. 6. Also in this case, the radius of curvature R will be estimated on the assumption that the bogie 110 satisfies the condition of being radially positioned.

More specifically, as shown in FIG. 6, when the radius of curvature: R, the center of the radius of curvature: O, the centers of front/rear bogies 112 and 114: A and C, a half of the shortest distance between the centers of the front/rear bogies 112 and 114: L, the center of $\overset{\frown}{AC}$ : B, and the distance between a segment AC and a point B: $\Delta$, since $\Delta$ equals a value that subtracts a distance between the segment AC and the center of radius R of curvature, i.e. the point O, from the radius of curvature R, according to the Pythagorean theorem, $\Delta = R - \sqrt{(R^2 - L^2)}$ , which can be rearranged with reference to the radius of curvature R as follows:

$$Equation\ 4$$

$$R = \frac{\Delta^2 + L^2}{2\Delta}$$

Thus, when position data (the location on the x-y coordinates shown in FIG. 6) on the point A (the center of the front bogie 112) is continuously obtained using the GPS 220 attached to the center of the front bogie 112, the position data on the point C (the center of the rear bogie 114) can be obtained by using the moving speed of the railroad vehicle and the distance between the front and rear bogies 112 and 114. Since the position data on the point B can also be obtained with reference to the position data on the points A and C, $\Delta$ (y-displacement from the point A in FIG. 6) can be obtained, and then the radius of curvature R can be estimated using the obtained $\Delta$ (in FIG. 6, a maximum distance between a segment connecting the centers of the front and rear bogies 112 and 114 and a path along which the center of the railroad vehicle moves).

Then, the estimated radius ($R_{est}$) of curvature is substituted into the above Equation 2,

$$2\delta_{desire} = \frac{2d}{R_{est}} = \frac{2d}{(1000/C_{est})} = \frac{2d\,C_{est}}{1000}$$

, to calculate the target steering angle ($\delta_{desire}$) of the wheel and axle 120. When the wheel and axle 120 is controlled according to the calculated radius R of curvature, unlike the related art in which only curved lines and linear lines are distinguished between, the steering angle ($\delta$) of the wheel and axle 120 is controlled according to various types of curved lines to considerably reduce the angle of attack, thereby reducing the friction and abrasion between the wheel and the line, and thus providing an improved comfortable ride.

Next, the apparatus for active steering control of a railroad vehicle using the target steering angle ($\delta_{desire}$), which was obtained using the estimated radius R of curvature, will now be described. As shown in FIG. 7, the apparatus for active steering control includes a measuring unit 200, an estimating unit 300, a calculating unit 400, a controller 500, and an actuator 600.

The measuring unit 200 measures drive data of the railroad vehicle that is moving, particularly the drive data occurring during driving at a curved line, in which the steering angle ($\delta$) of the wheel and axle 120 is generated.

Here, the measuring unit 200 includes either a displacement sensor 210 or a GPS 220, or otherwise both the displacement sensor 210 and the GPS 220. The displacement sensor 210, as set forth before, includes a relative displacement measuring device 212 and a relative angle measuring device 214 to measure relative longitudinal-displacement ($\Delta_1$, $\Delta_2$) and a relative angle ($\theta_1$, $\theta_2$), respectively, between the vehicle body 100 and respective front and rear bogies 112 and 114, which are generated and vary with the curvature C of the curved line when the railroad vehicle moves on the curved line.

Here, the relative displacement ($\Delta_1$, $\Delta_2$) and the relative angle ($\theta_1$, $\theta_2$), which are measured by the displacement sensor 210 consisting of the relative displacement measuring device 212 and the relative angle measuring device 214, are used to estimate in real-time the radius of curvature R of the curved line, on which the railroad vehicle moves, using Equation 3.

Further, the GPS 220 is mounted at the center of the front bogie to measure the central position of the front bogie 112 at regular time intervals. The data measured by the GPS 220 is used to estimate the radius of curvature R of the curved line, on which the railroad vehicle moves, using the Equation 4.

In the meantime, the measuring unit 200 may further include a device 230 for measuring a steering angle, which serves to obtain an estimated value of a steering angle ($\delta$) of the wheel and axle actually controlled by the drive of the actuator 600, wherein the estimated value is used to make a comparison with the target steering angle ($\delta_{desire}$) of the wheel and axle, which is calculated using the estimated radius R of curvature of the curved line, which is estimated using the data measured by the GPS 220 or the displacement sensor 210. Here, the estimation of the steering angle ($\delta$) of the wheel and axle according to the driving of the actuator 600 made by measuring the driven displacement of the actuator 600 will not be further described in detail because the correlation between the driven displacement and the steering angle ($\delta$) of the wheel and axle can vary according to the mounting positions of the actuator, and a person skilled in the art can easily estimate it.

Further, it may be of course such that the device 230 for measuring the steering angle is directly mounted to the wheel and axle 120 so as to measure the steering angle ($\delta$) of the wheel and axle that is being controlled in real-time.

In the meantime, the estimating unit 300 serves to estimate the radius of curvature R of the curved line, on which a railroad vehicle moves, using the drive data of the moving railroad vehicle which is measured by the measuring unit 200. As previously set forth, it may be configured such that the relative displacement ($\Delta_1$, $\Delta_2$) and the relative angle ($\theta_1$, $\theta_2$) between the vehicle body 100 and the respective front and rear bogies 112 and 114, which are measured by the displacement sensor 210 consisting of the relative displacement measuring device 212 and the relative angle meas-

$$R = \frac{2Lx}{\Delta}$$

uring device 214, are substituted for Equation 3, , so as to estimate the radius ($R_{est}$) of curvature, or otherwise the central position of the front bogie 112, which is measured by the GPS 220, is substituted for Equation 4,

$$R = \frac{\Delta^2 + L^2}{2\Delta}$$

, so as to estimate the radius ($R_{est}$) of curvature.

Next, the calculating unit 400 serves to calculate the target **steering** angle ($\delta_{desire}$) of the wheel and axle of the moving railroad vehicle, using the estimated radius R of curvature estimated by the estimating unit 300. It may be configured such that the estimated radius ($R_{est}$) of curvature estimated by Equations 3 and 4 or the estimated curvature ($C_{est}$) obtained using the estimated radius ($R_{est}$) of curvature is substituted into the above Equation 2,

$$2\delta = \frac{2d}{R} = \frac{2d}{(1000/C)} = \frac{2dC}{1000}$$

, to obtain

$$2\delta_{desire} = \frac{2d}{R_{est}} = \frac{2d}{(1000/C_{est})} = \frac{2dC_{est}}{1000}$$

,

which is then used to calculate the target steering angle ($\delta_{desire}$) of the wheel and axle.

In the meantime, the controller 500 serves to compare the target steering angle ($\delta_{desire}$) of the wheel and axle set by the calculating unit 400 with the steering angle ($\delta$) of the wheel and axle that is actually driven so as to generate a steering control signal to the actuator 600. The controller includes a comparer 510 and a signal generator 520.

More specifically, the comparer 510 serves to compare the target steering angle ($\delta_{desire}$) of the wheel and axle, which is set by the calculating unit 400, with the steering angle ($\delta$) of the wheel and axle which is actually driven. Here, as described before, the actually-driven steering angle ($\delta$) of the wheel and axle uses the steering angle ($\delta$) of the wheel and axle, which is estimated by the driven displacement of the actuator 600 measured by the device 230 for measuring the steering angle.

Further, the signal generator 520 serves to generate, to the actuator 600, a steering control signal that corresponds to a difference between the target steering angle ($\delta_{desire}$) and the actually-driven steering angle ($\delta$) of the wheel and axle, using a comparison result obtained by the comparer 510. The steering control signal is continuously generated until the difference obtained by the comparer 510 becomes zero, i.e. the target steering angle ($\delta_{desire}$) of the wheel and axle coincides with the actually-driven steering angle ($\delta$) of the wheel and axle.

Finally, the actuator 600 is connected with the wheel and axle 120 of the railroad vehicle to steer the wheel and axle 120 using the control signal of the controller 500. The detailed description thereof was disclosed in the Applicant's prior patent applications, KR patent application Nos. 10-2008-0134796 and 10-2008-0134843, so a further description will be omitted herein.

When the actuator having the structure disclosed in those patent applications is driven to generate a steering angle used to control the wheel and axle 120 using the apparatus and method for active steering control of a railroad vehicle according to the present invention, as shown in FIG. 13, a steering angle (frt_yaw) of the front wheel-and-axle of the bogie 110 and a steering angle (rr_yaw) of the rear wheel-and-axle of the bogie 110 are formed in opposite directions, creating a steering angle of the front and rear wheel-and-axles formed like a fan.

An active steering control method of controlling a steering angle ($\delta$) of the wheel and axle of the railroad vehicle moving on a curved line, using the above-mentioned active steering apparatus, will now be described.

First, as shown in FIG. 9, the method includes measuring drive data (S10), estimating a radius of curvature (S20), setting a target steering angle (S30), comparing steering angles (S40), and controlling a steering angle (S50). In the measuring of the steering angle, the drive data of a railroad vehicle that is moving on the curved line of a track is measured. The drive data includes relative angles ($\theta_1$, $\theta_2$) and relative longitudinal displacements ($\Delta_1$, $\Delta_2$) between a

vehicle body 100 and bogies 110, and position data of the bogies 110.

When using relative angles ($\theta_1$, $\theta_2$) and relative longitudinal displacements ($\Delta_1$, $\Delta_2$) between a vehicle body 100 and bogies 110 as the drive data, the measuring of the drive data (S10) includes measuring a relative angle (S12) and measuring a relative displacement (S14). In the measuring (S12) of the relative angle, the relative angles ($\theta_1$, $\theta_2$) which are generated between the vehicle body 100 and the front and rear bogies 112 and 114 when the railroad vehicle is moving on the curved line are measured using a displacement sensor 210, particularly a device 214 for measuring a relative angle. In the measuring (S14) of the relative displacement, the relative longitudinal displacements ($\Delta_1$, $\Delta_2$) which are generated between the vehicle body 100 and the front and rear bogies 112 and 114 when the railroad vehicle is moving on the curved line are measured using a displacement sensor 210, particularly, a device 212 for measuring a relative displacement.

Further, when using the position data of the bogie 110 as the drive data, the measuring (S10) of the drive data includes obtaining position data (S16) and estimating position data (S18). In obtaining (S16) the position data, the central position of the front bogie 112 is obtained using a GPS 220. Specifically, the GPS 220 is attached to the center of the front bogie 112, so that the central position of the front bogie can be obtained in real-time.

Further, in estimating (S18) the position data, the position data on the center of the rear bogie 114 is estimated using the position data on the center of the front bogie 112, which is obtained using the GPS 220. Here, since the center of the rear bogie 114 is located on the radius of curvature R along which the center of the front bogie 112 passes, data on the central position of the front bogie 112 is obtained at regular time intervals using the GPS 220, and the central position of the rear bogie 114 among the obtained position data can be estimated in consideration of the speed of the moving railroad vehicle and the distance between the front and rear bogies 112 and 114.

Next, the estimating (S20) the position data, the radius of curvature R of the curved line on which the railroad vehicle moves is estimated using the drive data of the railroad vehicle measured when measuring (S10) the drive data. If the drive data is the relative angles ($\theta_1$, $\theta_2$) and the relative longitudinal displacements ($\Delta_1$, $\Delta_2$) between a vehicle body

$$R_{est} = \frac{2Lx}{\Delta}$$

100 and bogies 110, the radius ($R_{est}$) of curvature is estimated using Equation 3, . Further, if the drive data is the position data on the center of the front and rear bogies 112 and 114, the radius ($R_{est}$) of the curvature is

$$R_{est} = \frac{\Delta^2 + L^2}{2\Delta}$$

estimated using Equation 4, .

Next, in setting (S30) the target steering angle, the target steering angle ($\delta_{desire}$) of the wheel and axle of the moving railroad vehicle is set using the estimated radius of curvature R estimated in the estimating (S20) of the radius of curvature. Here, the estimated radius ($R_{est}$) of curvature of the curved line estimated by Equations 3 and 4 or the estimated curvature ($C_{est}$) which is defined as the reciprocal of the estimated radius ($R_{est}$) of curvature is substituted

$$2\delta = \frac{2d}{R} = \frac{2d}{(1000/C)} = \frac{2dC}{1000}$$

into the above Equation 2, , to obtain

$$2\delta_{desire} = \frac{2d}{R_{est}} = \frac{2d}{(1000/C_{est})} = \frac{2dC_{est}}{1000}$$

, which is then used to calculate the target steering angle ($\delta_{desire}$) of the wheel and axle.

Next, in comparing (S40) the steering angles, the target steering angle ($\delta_{desire}$) of the wheel and axle is compared with the steering angle ($\delta$) of the wheel and axle that is actually driven. That is, the target steering angle ($\delta_{desire}$) of the wheel and axle, which is estimated by the Equation 2 in the setting (S30) of the target steering angle, is compared with the steering angle ($\delta$) of the wheel and axle which is actually driven.

Here, the actually-driven steering angle ($\delta$) of the wheel and axle is estimated by the driven displacement of the actuator 600 which is connected with the wheel and axle 120 to steer the wheel and axle 120. The driven displacement of the actuator 600 can be obtained by the device 230 for measuring the steering angle.

Next, in controlling (S50) the steering angle, the steering angle ($\delta$) of the wheel and axle is controlled according to the results of comparing the steering angle ($\delta$) of the wheel and axle. Specifically, a steering control signal that corresponds to a difference between the target steering angle ($\delta_{desire}$) and the actually-driven steering angle ($\delta$) of the wheel and axle, which is obtained using a comparison result obtained in the comparing (S40) of the steering angle is transmitted to the actuator 600 connected with the wheel and axle 120 so as to steer the wheel and axle 120 to the extent corresponding to the difference.

In the controlling (S50) of the steering angle, the steering angle ($\delta$) of the wheel and axle is continuously controlled until the difference between the target steering angle ($\delta_{desire}$) and the actually-driven steering angle ($\delta$) of the wheel and axle becomes zero, i.e. there is no difference between the target steering angle ($\delta_{desire}$) and the actually-driven steering angle ($\delta$) of the wheel and axle, which are compared with each other in the comparing (S40) of the steering angle, so that the steering angle ($\delta$) of the wheel and axle which is actually driven while the railroad vehicle is moving can be controlled to be close in proximity to the target steering angle ($\delta_{desire}$) of the wheel and axle.

A test comparison will now be made between the present active control of a steering angle ($\delta$) and the conventional control of a steering angle ($\delta$).

First, relative angles in the cases of performing the active steering control during moving on the curved line and of not performing the same were compared. As shown in FIG. 10, a comparison result is as follows: while a target steering angle ($\delta_{desire}$) on a radius R300 of curvature was 0.4°, the steering angle ($\delta$) of the wheel and axle according to the present active steering control was measured as 0.38°, and the steering angle ($\delta$) of the wheel and axle according to the conventional steering control was measured as 0.08°, showing a remarkable difference therebetween.

Next, when moving on a curved line having a radius of curvature R300, the longitudinal force and lateral force applied to an outer wheel were compared. As shown in FIGS. 11 and 12, it could be seen that when adapting the present active steering control, the longitudinal and lateral forces, applied to the bogie 110, were remarkably reduced.

Thus, according to the present invention, the apparatus and method for active steering control of a railroad vehicle are able to estimate the radius of curvature R of a curved line of a rail in real-time when the railroad vehicle moves on the curved line and control an optimal steering angle ($\delta$) on the wheel and axle 120 according to the estimated radius R of curvature. Further, the apparatus and method can smoothly steer the moving railroad vehicle and reduce an angle of attack, which exists between the curved line and the wheel and axle 120, and therefore abrasion of the wheel and the rail, providing a comfortable ride. Furthermore, input parameters required for the control of the steering of the wheel and axle 120 are made up of data that are actually measurable from the railroad vehicle, so that they are practically applicable to all of currently available vehicles, additionally providing the remarkable effects of improved practicality.

Although the embodiments of the present invention have been disclosed for illustrative purposes, those skilled in the art will appreciate that various modifications, additions and substitutions are possible, without departing from the scope of the invention as disclosed in the accompanying claims.

[Industrial Applicability]

As described above, the apparatus and method for active steering control of a railroad vehicle can smoothly steer a railroad vehicle that is moving, while remarkably reducing an angle of attack which exists between a curved line of a rail track and the wheel and axle, by estimating the radius of curvature of the curved line in real-time when the railroad vehicle moves on the curved line and controlling an optimal steering angle of the wheel and axle according to the estimated radius of curvature.

**Claims**

1. A railroad vehicle provided with an apparatus for active control of the railroad vehicle, wherein the apparatus comprises a measuring unit (200) measuring drive data of the railroad vehicle that is moving; an estimating unit (300) estimating a radius of curvature of a curved line on which the railroad vehicle is moving, by using the data measured by the measuring unit (200); a calculating unit (400) setting a target value of a steering angle of a wheel and an axle (120) of the moving railroad vehicle, by using the radius of curvature estimated by the estimating unit (300); a controller (500) comparing an actual steering angle of the wheel and axle (120) with the target value of the steering angle of the wheel and axle (120), which is set by the calculating unit (400) to generate a steering control signal for the wheel and axle (120); and an actuator (600) steering the wheel and axle (120) using the steering control signal received from the controller (500),

wherein the measuring unit (200) includes a relative displacement measuring device (212) and a relative angle measuring device (214) installed in one side of a bogie part to measure a relative longitudinal-displacement and a relative angle, respectively, between a vehicle body (100) and respective front (112) and rear (114) bogies, or a Global Positioning System (220), also known as GPS, installed at a center of the front bogie (112) of the vehicle body (100), and

wherein the estimating unit (300) estimates the radius of curvature using a simple Equation with variables including a central position of the front bogie measured by the GPS, the Equation being as follows:

$$R_{est} = \frac{\Delta^2 + L^2}{2\Delta}$$

where $R_{est}$ is the estimated radius of curvature, L is the half of the distance between the centers of the front and rear bogies, $\Delta$ is the maximum distance between a segment connecting the centers of the front (112) and rear (114) bogies and a path along which the center of the front bogie moves.

2. A railroad vehicle according to claim 1, wherein the measuring unit (200) further includes a measurer (230) measuring the actual steering angle of the wheel and axle (120) by measuring a driven displacement of the actuator (600).

3. A railroad vehicle according to claim 1, wherein the estimating unit (300) estimates the radius of curvature using a simple Equation with variables including the relative displacement and the relative angle measured by the relative displacement and relative angle measuring devices, respectively, the Equation being as follows:

$$R_{est} = \frac{2Lx}{\Delta}$$

where $R_{est}$ is the estimated radius of curvature, 2 is the distance between centers of the front (112) and rear (114) bogies, X is the relative displacement and a distance between the relative angle measuring device and the center of the bogie, $\Delta$ is the sum of the relative longitudinal displacements ($\Delta_1$, $\Delta_2$) between the vehicle body (100) and the front/rear bogies (112, 114).

4. A railroad vehicle according to claim 1, wherein the calculating unit (400) sets the target value of the steering angle of the wheel and axle (120) of the moving railroad vehicle using a simple Equation with variables including the radius of curvature measured by the estimating unit (300), the Equation being as follows:

$$2\delta_{desire} = \frac{2d}{R_{est}} = \frac{2d}{(1000/C_{est})} = \frac{2d\,C_{est}}{1000}$$

where $\partial_{desire}$ is a target steering angle of wheel and axle, d is the half of wheelbase (m), R is the radius of curvature, C is the curvature (1/Km) defined as 1/R.

5. A railroad vehicle according to claim 3, wherein the controller (500) includes a comparer (510) that compares the target value of the steering angle of the wheel and axle (120) set by the calculating unit (400) with the steering angle of the wheel and axle estimated by the estimating unit (300), and a signal generator (520) that generates the steering control signal on the wheel and axle (120) and sends the same to the actuator (600), using a compared result from the comparer (510).

6. A method for active steering of a railroad vehicle according to any of the preceding claims, the method comprising:

measuring drive data of the railroad vehicle that is moving;
estimating a radius of curvature of a curved line of a track on which the railroad vehicle moves, using the measured drive data;
setting a target value of a steering angle of the wheel and axle of the moving railroad vehicle, using the estimated radius of curvature;
comparing the target value of the steering angle of the wheel and axle with an actual steering angle of the wheel and axle; and
controlling the steering angle of the wheel and axle according to a comparison result,
wherein the measuring the drive data includes:

obtaining position information about a central position of the front bogie (112) in real-time, using a GPS (220) attached to the center of the front bogie (112); and

estimating the position information about the central position of the rear bogie (114) using the obtained central position of the front bogie (112).

**7.** The method according to claim 8, wherein the measuring of the drive data includes:

measuring a relative angle generated between a vehicle body (100) and front (112) and rear (114) bogies when the railroad vehicle moves on the curved line, using a displacement sensor; and

measuring a relative longitudinal displacement generated between the vehicle body (100) and front (112) and rear (114) bogies when the railroad vehicle moves on the curved line, using a displacement sensor.

**8.** The method according to claim 6, wherein the actual steering angle is obtained by measuring the driven displacement of the actuator (600) using a measurer for measuring a steering angle.

**9.** The method according to claim 6, wherein in the controlling of the steering angle, the steering angle of the wheel and axle (120) is continuously controlled until there is no difference between the target value of the steering angle and the actual steering angle of the wheel and axle (120).

**Patentansprüche**

**1.** Ein Schienenfahrzeug, das mit einer Vorrichtung zum aktiven Steuern des Schienenfahrzeugs bereitgestellt ist, wobei die Vorrichtung eine Messeinheit (200), die Fahrdaten des sich bewegenden Schienenfahrzeugs misst, eine Abschätzeinheit (300), die einen Krümmungsradius einer gekrümmten Linie, auf der sich das Schienenfahrzeug bewegt, unter Verwendung der von der Messeinheit (200) gemessenen Daten abschätzt, eine Berechnungseinheit (400), die einen Zielwert eines Lenkwinkels eines Rades und einer Achse (120) des sich bewegenden Schienenfahrzeugs unter Verwendung des von der Abschätzeinheit (300) abgeschätzten Krümmungsradius festlegt, eine Steuerungseinheit (500), die einen tatsächlichen Lenkwinkel des Rades und der Achse (120) mit dem Zielwert des Lenkwinkels des Rades und der Achse (120) vergleicht, der von der Berechnungseinheit (400) festgelegt wird, um ein Lenksteuersignal für das Rad und die Achse (120) zu erzeugen, und einen Aktuator (600) aufweist, der das Rad und die Achse (120) unter Verwendung des von der Steuerungseinheit (500) empfangenen Lenksteuersignals lenkt,

wobei die Messeinheit (200) eine Relativverschiebung-Messvorrichtung (212) und eine Relativwinkel-Messvorrichtung (214), die in einer Seite eines Drehgestellteils installiert sind, um jeweilig eine relative Längsverschiebung und einen Relativwinkel zwischen einem Fahrzeugkörper (100) und einem zugehörigen vorderen (112) und hinteren (114) Drehgestell zu messen, oder ein globales Positionierungssystem (220) aufweist, das auch als GPS bekannt ist, und in einer Mitte des vorderen Drehgestells (112) des Fahrzeugkörpers (100) installiert ist, und

wobei die Abschätzeinheit (300) den Krümmungsradius unter Verwendung einer einfachen Gleichung mit Variablen abschätzt, die eine durch das GPS gemessene zentrale Position des vorderen Drehgestells einschließen, wobei die Gleichung wie folgt lautet:

$$R_{est} = \frac{\Delta^2 + L^2}{2\Delta}$$

wobei $R_{est}$ der geschätzte Krümmungsradius ist, L die Hälfte der Distanz zwischen den Mittelpunkten des vorderen und des hinteren Drehgestells ist, $\Delta$ die maximale Distanz zwischen einem Segment, das die Mittelpunkte des vorderen (112) und des hinteren (114) Drehgestells verbindet, und einem Pfad ist, auf dem sich der Mittelpunkt des vorderen Drehgestells bewegt.

**2.** Ein Schienenfahrzeug gemäß Anspruch 1, wobei die Messeinheit (200) ferner einen Messwertgeber (230) aufweist, der den tatsächlichen Lenkwinkel des Rades und der Achse (120) durch Messen einer Betätigungsverschiebung des Aktuators (600) misst.

**3.** Ein Schienenfahrzeug gemäß Anspruch 1, wobei die Abschätzeinheit (300) den Krümmungsradius unter Verwendung einer einfachen Gleichung mit Variablen abschätzt, die die Relativverschiebung und den Relativwinkel aufweisen, die von der jeweiligen Relativverschiebung-Messvorrichtung und Relativwinkel-Messvorrichtung gemessen werden, wobei die Gleichung wie folgt lautet:

$$R_{est} = \frac{2Lx}{\Delta}$$

wobei $R_{est}$ der geschätzte Krümmungsradius ist, 2 die Distanz zwischen den Mittelpunkten des vorderen (112) und des hinteren (114) Drehgestells ist, X die Relativverschiebung und eine Distanz zwischen der Relativwinkel-Messvorrichtung und dem Mittelpunkt des Drehgestells ist, $\Delta$ die Summe der relativen Längsverschiebungen ($\Delta_1$, $\Delta_2$) zwischen dem Fahrzeugkörper(100) und dem vorderen/hinteren Drehgestell (112, 114) ist.

**4.** Ein Schienenfahrzeug gemäß Anspruch 1, wobei die Berechnungseinheit (400) den Zielwert des Lenkwinkels des Rades und der Achse (120) des sich bewegenden Schienenfahrzeugs unter Verwendung einer einfachen Gleichung mit Variablen einschließlich des von der Abschätzeinheit (300) gemessenen Krümmungsradius festlegt, wobei die Gleichung wie folgt lautet:

$$2\delta_{desire} = \frac{2d}{R_{est}} = \frac{2d}{(1000/C_{est})} = \frac{2dC_{est}}{1000}$$

wobei $\delta_{desire}$ ein Ziellenkwinkel von Rad und Achse ist, d die Hälfte des Radstandes (m) ist, R der Krümmungsradius ist, C die Krümmung (1/Km) ist, die als 1/R definiert ist.

**5.** Ein Schienenfahrzeug gemäß Anspruch 3, wobei die Steuerungseinheit (500) eine Vergleichseinheit (510), die den von der Berechnungseinheit (400) festgelegten Zielwert des Lenkwinkels von Rad und Achse (120) mit dem von der Abschätzeinheit (300) abgeschätzten Lenkwinkel von Rad und Achse vergleicht, und einen Signalgenerator (520) aufweist, der das Lenksteuersignal von Rad und Achse (120) erzeugt und unter Verwendung eines Vergleichsergebnisses der Vergleichseinheit (510) an den Aktuator (600) sendet.

**6.** Ein Verfahren zum aktiven Lenken eines Schienenfahrzeugs gemäß einem der vorhergehenden Ansprüche, wobei das Verfahren aufweist:

Messen von Fahrdaten des sich bewegenden Schienenfahrzeugs,
Abschätzen eines Krümmungsradius einer gekrümmten Linie eines Gleises, auf dem sich das Schienenfahrzeug bewegt, unter Verwendung der gemessenen Fahrdaten,
Festlegen eines Zielwertes eines Lenkwinkels des Rades und der Achse des sich bewegenden Schienenfahrzeugs unter Verwendung des abgeschätzten Krümmungsradius,
Vergleichen des Zielwerts des Lenkwinkels von Rad und Achse mit einem tatsächlichen Lenkwinkel von Rad und Achse, und
Steuern des Lenkwinkels des Rades und der Achse in Abhängigkeit von einem Vergleichsergebnis,
wobei das Messen der Fahrdaten aufweist:

Erhalten von Positionsinformationen über eine zentrale Position des vorderen Drehgestells (112) in Echtzeit unter Verwendung eines GPS (220), das an der Mitte des vorderen Drehgestells (112) angebracht ist, und
Abschätzen der Positionsinformationen über die zentrale Position des hinteren Drehgestells (114) unter Verwendung der erhaltenen zentralen Position des vorderen Drehgestells (112).

**7.** Das Verfahren gemäß Anspruch 8, wobei das Messen der Fahrdaten aufweist:

Messen eines Relativwinkels, der zwischen einem Fahrzeugkörper (100) und einem vorderen (112) und einem hinteren (114) Drehgestell erzeugt wird, wenn sich das Schienenfahrzeug auf der gekrümmten Linie bewegt, unter Verwendung eines Verschiebungssensors, und
Messen einer relativen Längsverschiebung, die zwischen dem Fahrzeugkörper (100) und dem vorderen (112) und dem hinteren (114) Drehgestell erzeugt wird, wenn sich das Schienenfahrzeug auf der gekrümmten Linie bewegt, unter Verwendung eines Verschiebungssensors.

8. Das Verfahren gemäß Anspruch 6, wobei der tatsächliche Lenkwinkel durch Messen der Betätigungsverschiebung des Aktuators (600) unter Verwendung eines Messwertgebers zum Messen eines Lenkwinkels ermittelt wird.

9. Das Verfahren gemäß Anspruch 6, wobei beim Steuern des Lenkwinkels der Lenkwinkel des Rades und der Achse (120) kontinuierlich gesteuert wird, bis keine Differenz mehr zwischen dem Zielwert des Lenkwinkels und dem tatsächlichen Lenkwinkel des Rades und der Achse (120) besteht.

## Revendications

1. Véhicule ferroviaire équipé d'un appareil pour une commande active du véhicule ferroviaire, dans lequel l'appareil comprend une unité de mesure (200) mesurant des données de conduite du véhicule ferroviaire qui se déplace ; une unité d'estimation (300) estimant un rayon de courbure d'une ligne courbe sur laquelle le véhicule ferroviaire se déplace, en utilisant les données mesurées par l'unité de mesure (200) ; une unité de calcul (400) définissant une valeur cible d'un angle de braquage d'un ensemble roue-essieu (120) du véhicule ferroviaire en mouvement, en utilisant le rayon de courbure estimé par l'unité d'estimation (300) ; un dispositif de commande (500) comparant un angle de braquage réel de l'ensemble roue-essieu (120) avec la valeur cible de l'angle de braquage de l'ensemble roue-essieu (120), qui est défini par l'unité de calcul (400) pour générer un signal de commande de braquage pour l'ensemble roue-essieu (120) ; et un actionneur (600) braquant l'ensemble roue-essieu (120) en utilisant le signal de commande de braquage reçu du dispositif de commande (500),

dans lequel l'unité de mesure (200) comprend un dispositif de mesure de déplacement relatif (212) et un dispositif de mesure d'angle relatif (214) installés sur un côté d'une partie de bogie pour mesurer un déplacement longitudinal relatif et un angle relatif, respectivement, entre une caisse de véhicule (100) et des bogies avant (112) et arrière (114) respectifs, ou un système de positionnement global (220), également connu sous le nom de GPS, installé au centre du bogie avant (112) de la caisse de véhicule (100), et

dans lequel l'unité d'estimation (300) estime le rayon de courbure en utilisant une équation simple avec des variables comprenant une position centrale du bogie avant mesurée par le GPS, l'équation étant la suivante :

$$R_{est} = \frac{\Delta^2 + L^2}{2\Delta}$$

où $R_{est}$ est le rayon de courbure estimé, L est la moitié de la distance entre les centres des bogies avant et arrière, $\Delta$ est la distance maximale entre un segment reliant les centres des bogies avant (112) et arrière (114) et un trajet le long duquel se déplace le centre du bogie avant.

2. Véhicule ferroviaire selon la revendication 1, dans lequel l'unité de mesure (200) comprend en outre un mesureur (230) mesurant l'angle de braquage réel de l'ensemble roue-essieu (120) en mesurant un déplacement entraîné de l'actionneur (600).

3. Véhicule ferroviaire selon la revendication 1, dans lequel l'unité d'estimation (300) estime le rayon de courbure en utilisant une équation simple avec des variables comprenant le déplacement relatif et l'angle relatif mesurés par les dispositifs de mesure de déplacement relatif et d'angle relatif, respectivement, l'équation étant la suivante :
où $R_{est}$ est le rayon de courbure estimé, 2 est la distance entre les centres des bogies avant (112)

$$R_{est} = \frac{2Lx}{\Delta}$$

et arrière (114), X est le déplacement relatif et une distance entre le dispositif de mesure d'angle relatif et le centre du bogie, $\Delta$ est la somme des déplacements longitudinaux relatifs ($\Delta_1$, $\Delta_2$) entre la caisse du véhicule (100) et les bogies avant/arrière (112, 114).

4.  Véhicule ferroviaire selon la revendication 1, dans lequel l'unité de calcul (400) définit la valeur cible de l'angle de braquage de l'ensemble roue-essieu (120) du véhicule ferroviaire en mouvement

$$2\delta_{desire} = \frac{2d}{R_{est}} = \frac{2d}{(1000/C_{est})} = \frac{2d\,C_{est}}{1000}$$

en utilisant une équation simple avec des variables comprenant le rayon de courbure mesuré par l'unité d'estimation (300), l'équation étant la suivante :
où $\delta_{desire}$ est un angle de braquage cible de l'ensemble roue-essieu, d est la moitié de l'écartement d'essieux (m), R est le rayon de courbure, C est la courbure (1/Km) définie comme 1/R

5.  Véhicule ferroviaire selon la revendication 3, dans lequel le dispositif de commande (500) comprend un comparateur (510) qui compare la valeur cible de l'angle de braquage de l'ensemble roue-essieu (120) définie par l'unité de calcul (400) avec l'angle de braquage de l'ensemble roue-essieu estimé par l'unité d'estimation (300), et un générateur de signal (520) qui génère le signal de commande de braquage sur l'ensemble roue-essieu (120) et envoie celui-ci à l'actionneur (600), en utilisant un résultat comparé provenant du comparateur (510).

6.  Procédé pour un braquage d'un véhicule ferroviaire selon l'une quelconque des revendications précédentes, le procédé comprenant les étapes consistant à :

    mesurer les données de conduite du véhicule ferroviaire qui se déplace ;
    estimer un rayon de courbure d'une ligne courbe d'une voie sur laquelle le véhicule ferroviaire se déplace, à l'aide des données de conduite mesurées ;
    fixer une valeur cible d'un angle de braquage de l'ensemble roue-essieu du véhicule ferroviaire en mouvement, à l'aide du rayon de courbure estimé ;
    comparer la valeur cible de l'angle de braquage de l'ensemble roue-essieu à un angle de braquage réel de l'ensemble roue-essieu ; et
    commander l'angle de braquage de l'ensemble roue-essieu en fonction d'un résultat de comparaison,
    dans lequel la mesure des données de conduite comprend les étapes consistant à :

    obtenir des informations de position concernant une position centrale du bogie avant (112) en temps réel, à l'aide d'un GPS (220) fixé au centre du bogie avant (112) ; et
    estimer les informations de position concernant la position centrale du bogie arrière (114) à l'aide de la position centrale obtenue du bogie avant (112).

7.  Procédé selon la revendication 8, dans lequel la mesure des données de conduite comprend les étapes consistant à :

    mesurer un angle relatif généré entre une caisse de véhicule (100) et des bogies avant (112) et arrière (114) lorsque le véhicule ferroviaire se déplace sur la ligne courbe, à l'aide d'un capteur de déplacement ; et
    mesurer un déplacement longitudinal relatif généré entre la caisse de véhicule (100) et les bogies avant (112) et arrière (114) lorsque le véhicule ferroviaire se déplace sur la ligne courbe, à l'aide d'un capteur de déplacement.

8.  Procédé selon la revendication 6, dans lequel l'angle de braquage réel est obtenu en mesurant le déplacement entraîné de l'actionneur (600) à l'aide d'un mesureur pour mesurer un angle de braquage.

9.  Procédé selon la revendication 6, dans lequel dans la commande de l'angle de braquage, l'angle de braquage de l'ensemble roue-essieu (120) est commandé en continu jusqu'à ce qu'il n'y ait pas de différence entre la valeur cible de l'angle de braquage et l'angle de braquage réel de l'ensemble roue-essieu (120).

[FIG. 1.]

Angle of attack

Torque

Radial angle

Center of curve

[FIG. 2.]

Center of curve

[FIG. 3.]

[FIG. 4.]

[FIG. 5.]

[FIG. 6.]

[FIG. 7.]

[FIG. 8.]

```
┌─────────────────────────────────────┐
│ Relative displacement between vehicle body │
│ Relative displacement between vehicle bogie │
│ Central position of front bogie      │
└─────────────────────────────────────┘
                  │
                  ▼
┌──────────────────┐    ┌──────────────────────┐              ┌──────────────────┐
│  Estimation  of  │───▶│ Set the target steering angle │    +         │                  │
│  Rest  and Cest  │    │ (2δ_desire) of the wheel and axle │──▶( )──────▶│  Steering force  │
└──────────────────┘    └──────────────────────┘      +                 └──────────────────┘
                                                                                  │
┌──────────────────┐    ┌──────────────────────┐                                  │
│  Displacement of │───▶│  Steering angle (2δ_est) │                               │
│     actuator     │    │  of the wheel and axle │──────────────────────────────  │
└──────────────────┘    └──────────────────────┘                                  │
         ▲                                                                         │
         └─────────────────────────────────────────────────────────────────────────┘
```

[FIG. 9.]

```
      S12                        S10                              S16
       │                          │                                │
┌──────────────────────┐  ┌──────────────────────┐  ┌──────────────────────────┐
│ Measurement of relative angle │◀─│ Measurement of drive data │──▶│ Obtaining of position data │
└──────────────────────┘  └──────────────────────┘  └──────────────────────────┘
       │                          │                                │
       ▼                          ▼                                │
┌──────────────────────────────┐  ┌──────────────────────────┐  ┌──────────────────────────┐
│ Measurement of relative displacement │──▶│ Estimation of radius of curvature │◀─│ Estimation of position data │
└──────────────────────────────┘  └──────────────────────────┘  └──────────────────────────┘
       │                          │                                │
      S14          S20            ▼                               S18
                        ┌──────────────────────┐
                        │  Set target value    │──S30
                        └──────────────────────┘
                                   │
                                   ▼
                        ┌──────────────────────┐
                 ┌─────▶│ Comparison of steering angles │──S40
                 │      └──────────────────────┘
                 │                 │
                 │                 ▼
              No │         ╱─────────────────╲
                 └────────│  δ_desire ≠ δ ?   │
                          ╲─────────────────╱
                                   │ Yes
                                   ▼
                        ┌──────────────────────┐
                        │ Control of steering angle │──S50
                        └──────────────────────┘
```

[FIG. 10.]

[FIG. 11.]

[FIG. 12.]

[FIG. 13.]

**EP 2 517 943 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100916594
- EP 0655378 A
- DE 4240098 A
- EP 0368403 A
- JP H08198108 A
- JP H08104233 A
- JP H08142862 A
- JP 2003237573 A
- KR 1020080134796
- KR 1020080134843